# EUROPÄISCHE PATENTSCHRIFT

(11) **EP 1 427 998 B1**
(45) Veröffentlichungstag und Bekanntmachung des Hinweises auf die Patenterteilung: **02.11.2016**
(21) Anmeldenummer: 02774624.7
(22) Anmeldetag: 17.09.2002
(51) Int. Cl.: G01F 1/84

(54) **MESSAUFNEHMER VOM VIBRATIONSTYP**
VIBRATION-TYPE MEASURING SENSOR
CAPTEUR DE MESURE DE TYPE VIBRATOIRE

(30) Priorität: 21.09.2001 EP 01122801; 29.10.2001 EP 01125774; 15.03.2002 US 364089 P
(43) Veröffentlichungstag der Anmeldung: 16.06.2004
(73) Patentinhaber: Endress + Hauser Flowtec AG, 4153 Reinach BL 1 (CH)
(72) Erfinder: ANKLIN, Martin, CH-4147 Aesch (CH); WENGER, Alfred, CH-8413 Neftenbach (CH)
(74) Vertreter: Andres, Angelika Maria
(86) Internationale Anmeldenummer: PCT/EP2002/010427
(87) Internationale Veröffentlichungsnummer: WO 2003/027616

(56) Entgegenhaltungen:
- WO-A-90/15310
- WO-A-92/19940
- US-A- 4 711 132
- US-A- 4 831 885
- US-A- 5 370 002
- US-A- 5 576 500
- US-A- 5 731 527

## Beschreibung

Die Erfindung betrifft einen, insb. für einen Coriolis-Massedurchflußmesser oder einen Coriolis-Massedurchfluß/ Dichtemesser geeigneten, Meßaufnehmer vom Vibrationstyp.

In der Meß- und Automatisierungstechnik werden zur Ermittlung des Massedurchflusses und/ oder der Dichte eines in einer Rohrleitung strömenden Fluids, insb. einer Flüssigkeit, oftmals solche Meßgeräte verwendet, die mittels eines Meßaufnehmers vom Vibrationstyp und einer daran angeschlossenen Meß- und Betriebsschaltung, im hindurchströmenden Fluid Reaktionskräfte, insb. mit dem Massedurchfluß korrespondierende Corioliskräfte und mit der Dichte korrespondierende Trägheitskräfte, bewirken und von diesen abgeleitet ein den jeweiligen Massedurchfluß und/ oder ein die jeweilige Dichte des Fluids repräsentierendes Meßsignal erzeugen.

Derartige Coriolis-Massedurchflußmesser oder Coriolis-Massedurchfluß/ Dichtemesser sind z.B. in der WO-A 01/ 33 174, der WO-A 00/ 57 141, der WO-A 98/ 07 009, der US-A 57 96 011, der US-A 57 31 527, der US-A 48 95 030, der US-A 47 81 069, der EP-A 1 001 254, der EP-A 553 939 oder in der EP-A 1 154 243 beschrieben, welche Coriolis-Massedurchflußmesser bzw. Coriolis-Massedurchfluß/ Dichtemesser unter Verwendung eines Meßaufnehmers vom Vibrationstyp die entsprechenden Meßsignale liefern, wobei die Meßaufnehmer jeweils wenigstens ein dem Führen eines Fluids dienendes, ein Einlaßende und ein Auslaßende aufweisendes, zumindest segmentweise gekrümmtes und zumindest zeitweise vibrierendes Meßrohr von vorgebbarem Meßrohrlumen umfassen, welches Meßrohr
- zum Hindurchströmenlassen des Fluids über ein in das Einlaßende mündendes Einlaßrohrstück und über ein in das Auslaßende mündendes Auslaßrohrstück mit einer angeschlossenen Rohrleitung kommuniziert und
- zum Verformen des Meßrohrlumens im Betrieb Biegeschwingungen um eine das Einlaß- und das Auslaßende imaginär verbindende erste Schwingungsachse ausführt.

Zum Erzeugen bzw. Aufrechterhalten der Schwingungen des wenigstens einen Meßrohrs ist an den Meßaufnehmern ferner jeweils eine von vorgenannter Meß- und Betriebsschaltung gespeiste Erregeranordnung für das jeweils wenigstens eine Meßrohr vorgesehen. Die Erregeranordnung weist dazu wenigstens einen ersten, bevorzugt elektrodynamischen oder aber auch elektromagnetischen, Schwingungserreger auf, der im Betrieb von einem alternierenden, insb. bipolaren, Erregerstrom durchflossen ist und der den Erregerstrom in eine auf das Meßrohr einwirkende Erregerkraft umwandelt.

Gekrümmte, z.B. in einer Rohrebene U- oder V-artig gekrümmte, Meßrohre, insb. von Coriolis-Massedurchflußmessern, werden im sogenannten Nutzmode üblicherweise zu Auslegerschwingungen angeregt, bei denen die Meßrohre einhergehend mit einer elastischen Verformung um die erste Schwingungsachse des Meßaufnehmers pendeln. Dazu ist der Schwingungserreger üblicherweise so im Meßaufnehmer angeordnet, daß er, insb. mittig, in einem Schwingungsbauch des Nutzmodes auf das Meßrohr einwirkt.

Bedingt durch die pendelartigen Auslegerschwingungen um die Längsachse werden im hindurchströmenden Fluid bekanntlich u.a. auch Corioliskräfte induziert, die ihrerseits wiederum dazu führen, daß den angeregten Auslegerschwingungen des Nutzmodes Auslegerschwingungen im sogenannten Coriolismode gleichfrequent überlagert werden. Bei Meßaufnehmern der beschriebenen Art entsprechen diese durch Corioliskräfte erzwungenen Auslegerschwingungen üblicherweise Drehschwingungen um eine, insb. senkrecht auf der ersten Schwingungsachse stehende, zweite Schwingungsachse, die im wesentlichen parallel zu einer gedachten Hochsachse des Meßaufnehmers verläuft.

Bei einer gekrümmten Rohrform werden bekanntlich durch thermisch bedingte Ausdehnungen, insb. auch bei der Verwendung von Materialien mit einem hohen thermischen Ausdehnungskoeffizienten, praktisch keine oder nur sehr gerinfügige mechanische Spannungen im Meßrohr selbst und/ oder in der angeschlossenen Rohrleitung hervorgerufen. Ferner kann das Meßrohr lang, insb. auch weit ausladend, ausgeführt sein und somit trotz einer relativ kurzen Einbaulänge, insb. auch bei relativ niedriger Erregerleistung, eine hohe Empfindlichkeit des Meßaufnehmers auf den zu messenden Massedurchfluß erzielt werden.

Die vorgenannten Umstände ermöglichen es auch, das Meßrohr bzw. die Meßrohre aus Materialien mit einem hohen thermischen Ausdehnungskoeffizienten und/ oder hohen Elastizitätsmodul, wie z.B. Edelstahl, herzustellen.

Die beiden zueinander parallel angeordneten, im wesentlichen identisch geformten Meßrohre der in der US-A 57 96 011 bzw. der WO-A 01/ 33 174 beschriebenen Meßaufnehmer sind im wesentlichen stetig gekrümmt, d.h. sie sind praktisch nirgends gerade.

Demgegenüber weisen die Meßrohre z.B. der in der US-A 57 31 527, der US-A 53 01 557, der US-A 48 95 030, der WO-A 00/ 57 141, der WO-A 01/ 33 174 oder der EP-A 1 154 243 gezeigten Meßaufnehmer jeweils wenigstens zwei gerade Rohrsegmente auf, die über ein bogenförmiges, insb. kreisbogenförmiges, Rohrsegment miteinander in Verbindung stehen. Derart gekrümmte Meßrohre mit geraden Rohrsegmenten zeichnen im Vergleich zu stetig gekrümmten Meßrohren insb. dadurch aus, daß sie mittels sehr einfacher Biegewerkzeuge kostengünstig gefertigt werden können. Während nämlich stetig gekrümmte Meßrohre üblicherweise weitausladende bogenförmige Rohrsegmente und zumeist auch mehrere Rohrsegmente verschieden großer Krümmungsradien aufweisen, können Meßrohre mit geraden Rohrsegmenten auch unter Verwendung von solchen bogenförmigen Rohrsegmenten gefertigt werden, die einen einzigen Krümmungsradius und/ oder auch vergleichsweise kleine Krümmungsradien aufweisen.

Bevorzugt werden die Meßrohre im Betrieb bei einer natürlichen momentanen Resonanzfrequenz, insb. auch bei konstantgeregelter Schwingungsamplitude, vibrieren gelassen. Da die natürliche Resonanzfrequenz bekanntlich auch von der momentanen Dichte des Fluids abhängig ist, kann mittels marktüblicher Coriolis-Massedurchflußmesser neben dem Massedurchfluß so z.B. auch die Dichte von strömenden Fluiden gemessen werden.

Zum örtlichen Erfassen von Vibrationen des Meßrohrs und zum Erzeugen von mit diesen korrespondierenden Sensorsignalen weist jeder der Meßaufnehmer ferner eine Sensoranordnung mit wenigstens einem einlaßseitigen und wenigstens einem auslaßseitigen, z.B. ebenfalls elektrodynamischen, Schwingungssensor auf. Aufgrund der Überlagerung von Nutz-und Coriolismode weisen die mittels der Sensoranordnung einlaßseitig und auslaßseitig erfaßten Schwingungen des Meßrohrs und somit auch die diesen entsprechenden Sensorsignale bekanntlich eine auch vom Massedurchfluß abhängige Phasendifferenz auf. Mittels der bereits erwähnten Meß- und Betriebsschaltung kann diese Phasendifferenz in der dem Fachmann bekannten direkt oder z.B. auch anhand einer Amplitudendifferenz indirekt gemessenen und zur Generierung des massedurchflußrepräsentativen Meßsignals verwendet werden. Ferner kann mittels der Meß- und Betriebsschaltung unter Berücksichtigung einer aktuellen Frequenz wenigstens eines der beiden Sensorsignale die Dichte des Fluids ermittelt werden.

Bekanntlich wirken auf den Meßaufnehmer, insb. auf das wenigstens eine Meßrohre, im Betrieb neben den oben beschriebenen, erwünschten Reaktionskräften, auch andere, insb. auch nicht beeinflußbare, physikalische Größen ein. So führt z.B. eine zumeist nicht konstant zu haltende Temperatur des Fluids bedingt durch die thermische Ausdehnung des Meßrohrs zwangsläufig auch dazu, daß der Meßaufnehmer neben einer Empfindlichkeit auf die primären Meßgrößen Massedurchfluß und Dichte auch eine Querempfindlichkeit gegenüber einer im Meßaufnehmer momentan herrschenden Temperaturverteilung aufweist. Zur Kompensation solcher temperaturbedingten Störeinflüsse auf die Meßsignale ist bei Coriolis-Massedurchflußmessern oder Coriolis-Massedurchfluß/ Dichtemessern daher üblicherweise auch mindestens ein Temperatursensor z.B. für die Messung der Temperatur des Meßrohrs oder einer Meßrohrumgebung vorgesehen.

Es ist ferner bereits bekannt, daß derartige Meßaufnehmer vom Vibrationstyp neben der vorbeschriebenen Querempfindlichkeit gegenüber einer im Inneren vorliegenden räumlichen und zeitlichen Temperaturverteilung außerdem auch eine signifikante Querempfindlichkeit gegenüber einem im Meßrohrlumen herrschenden statischen Innendruck bzw. gegenüber einer zwischen dem Meßrohrlumen und der äußeren Umgebung des Meßrohrs herrschenden Druckdifferenz aufweisen können. Auf diesen Sachverhalt wird z.B. auch in der US-A 57 31 527, der US-A 53 01 557, der WO-A 95/ 16 897 sowie auch der WO-A 98/ 07 009 hingewiesen. Diese Querempfindlichkeit des Meßaufnehmers auf Druck, insb. auch Druckänderungen, kann damit erklärt werden, daß vom Fluid je nach Höhe des Innendrucks bzw. der Druckdifferenz der Verformung des vibrierenden Meßrohrs eine unterschiedlich hohe Gegenkraft entgegengebracht wird.

Unglücklicherweise können solche Querempfindlichkeiten des Meßaufnehmers gegenüber Druck zu einem, zumeist unerwünschtes, "Übersprechen" des Drucks auf die mit dem Massendurchfluß korrespondierenden Corioliskräfte führen. Zur Gewährleistung der geforderten hohen Meßgenauigkeit, die üblicherweise zumindest im Bereich von etwa ±0.15% des tatsächlichen Massedurchflusses oder der tatsächlichen Dichte liegen soll, sind daher, insb. bei einem potentiell über einen weiten Bereich von z.B. mehr als 5 bar schwankendem Innendruck, zusätzliche Maßnahmen zur Kompensation der Druckabhängigkeit der Meßsignale erforderlich.

Zur Lösung des Problems wird z.B. in der US-A 53 01 557 vorgeschlagen, Meßrohre von vergleichsweise großer Rohrwanddicke zu verwenden, um den elastischen Verformungen des jeweiligen Meßrohrs zwar eine insgesamt sehr hohe, jedoch dann praktisch konstante Gegenkraft entgegenzusetzen. Dies wiederum führt aber dazu, insb. auch aufgrund des damit einhergehenden Massenzuwachses am Meßrohr, daß neben der Querempfindlichkeit auf Druck die Empfindlichkeit des Meßaufnehmers auf die primären Meßgrößen Massedurchfluß und Dichte abgesenkt wird. Ferner wird in der US-A 57 31 527 eine ähnliche Lösung vorgeschlagen, bei der die geraden Rohrsegmente mit röhrenförmigen Versteifungselementen aus anisotropischen, insb. glasfaser-verstärkten, Materialien zu versehen werden, welche Versteifungselemente dazu dienen, die geraden Rohrsegmente mit von der Orientierung der im Rohrsegment wirkenden mechanischen Spannungen abhängigen Steifigkeiten zu versehen, und so das Meßrohr bei guter Empfindlichkeit gegenüber Corioliskräften druckfester zu gestalten.

Eine weitere Möglichkeit zur Verringerung der Querempfindlichkeit des Meßaufnehmers auf Druck ist ferner in der WO-A 98/ 07 009 bzw. der WO-A 95/ 16 897 beschrieben. Es wird vorgeschlagen, zunächst den Innendruck bzw. die Druckdifferenz im Betrieb anhand von Resonanzfrequenzen zweier verschiedener, simultan oder nacheinander angeregter Schwingungsmoden des wenigstens einen vibrierenden Meßrohrs zu ermitteln und bei der Generierung des den Massedurchfluß repräsentierenden Meßsignals zu berücksichtigen. Zu diesem Zweck weist die dort beschriebene Erregeranordnung zusätzlich zum sonst üblichen einzigen Errerger wenigstens einen von diesem beabstandet auf das Meßrohr einwirkenden zweiten Schwingungserreger auf. Daher ist, wie sich unschwer erkennen läßt, neben einem mechanischen Mehraufwand auch ein erheblicher Mehraufwand hinsichtlich der Meß- und Betriebsschaltung sowie an darin vorgehaltener Rechenkapazität unvermeidlich. Dies führt einerseits zu einer deutlichen Erhöhung der Herstellkosten eines solchen Coriolis-Massedurchfluß/ Dichtemessers. Andererseits bedeutet ein derartige Erhöhung der Komplexität sowohl der installierten Hardware als auch der darin implementierten Firmware eine überproportionale Erhöhung der Fehler- oder gar Ausfallwahrscheinlichkeit und damit einhergehend eine deutliche Erhöhung des Überwachungsaufwands zur Gewährleistung der geforderten Betriebssicherheit des Coriolis-Massedurchfluß/ Dichtemessers.

Ausgehend vom genannten Stand der Technik liegt daher der Erfindung die Aufgabe zugrunde, einen für einen Coriolis-Massedurchflußmesser, insb. auch für einen Coriolis-Massedurchfluß/ Dichtemesser, geeigneten Meßaufnehmer vom Vibrationstyp anzugeben, dessen einziges Meßrohr oder dessen Meßrohre einfach herzustellen, insb. auch einfach zu biegen, sind und dessen Querempfindlichkeit auf den im Meßrohrlumen herrschenden Innendruck oder auf dessen Änderungen mit vergleichsweise einfachen, insb. auch kostengünstigen, Mitteln gering gehalten werden kann.

US 4 831 885 offenbart einen Coriolis-Durchflussmessgerät mit röhrenförmigen Versteifungselemente zur Änderung der Schwingungsmodenverteilung. Zur Lösung der Aufgabe besteht die Erfindung aus einem Messaufnehmer gemäß Ansprüche 1 und 2.

Nach einer bevorzugten zweiten Ausgestaltung der Erfindung umgreift das wenigstens erste Versteifungselement das Meßrohr im wesentlichen koaxial. Nach einer bevorzugten dritten Ausgestaltung der Erfindung weist das Meßrohr einen Innen-Durchmesser von mehr als 40 mm, insb. mehr als 50 mm, auf. Ein Grundgedanke der Erfindung besteht darin, mittels einer möglichst massearmen lokalen Versteifung im besonders drucksensiblen Bereich des wenigstens einen bogenförmigen Rohrsegments das Meßrohr, zumindest im Querschnitt, partiell möglichst formstabil zu halten und somit praktisch das gesamte Meßrohr derart zu stabilisieren, daß die mit den Biegeschwingungen einhergehenden Verformungen des Meßrohrlumens nahezu unabhängig vom herrschenden Innendruck bzw. unabhängig von oben genannter Druckdifferenz sind. Aufgrund dieser relativ geringen Zusatzmassen am Meßrohr und der somit gleichermaßen niedrig gehaltenen Gesamtmasse des Meßrohrs, bleibt die bereits bei herkömmlichen Meßaufnehmern erreichte hohe Empfindlichkeit auf die primären Meßgrößen Massedurchfluß und Dichte praktisch erhalten.

Die Erfindung beruht auf der Erkenntnis, daß bei in der beschriebenen Weise gekrümmten Meßrohren die Druckabhängigkeit der Verformung zwar im wesentlichen auf die vergleichsweise kurzen bogenförmigen Meßrohrsegmente konzentriert ist, hier jedoch so stark ausgeprägt sein kann, daß dieser Effekt für eine hochgenaue Ermittlung der primären Meßgrößen nicht mehr unberücksichtigt bleiben darf.

Die Erfindung und weitere Vorteile werden nachfolgend anhand von Ausführungsbeispielen näher erläutert, die in den Figuren der Zeichnung dargestellt sind; gleiche Teile sind in den Figuren mit gleichen Bezugszeichen versehen. Falls es der Übersichtlichkeit dienlich ist, wird auf die Angabe bereits vergebener Bezugszeichen in nachfolgenden Figuren verzichtet.
Fig. 1 zeigt perspektivisch eine erste Variante eines, insb. für einen Coriolis-Massedurchflußmesser oder einen Coriolis-Massedurchfluß-/ Dichtemesser geeigneten, Meßaufnehmer vom Vibrationstyp,
Fig. 2 zeigt perspektivisch eine zweite Variante eines, insb. für einen Coriolis-Massedurchflußmesser oder einen Coriolis-Massedurchfluß-/ Dichtemesser geeigneten, Meßaufnehmer vom Vibrationstyp und
Fig. 3 zeigt ein Meßrohr des Meßaufnehmers gemäß Fig. 1 und/oder 2 in einer Seitenansicht.

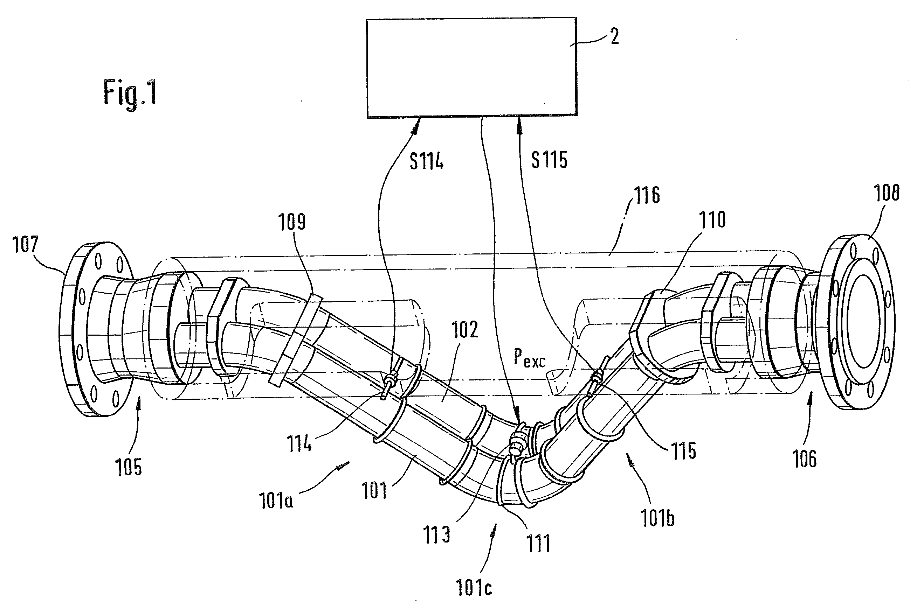

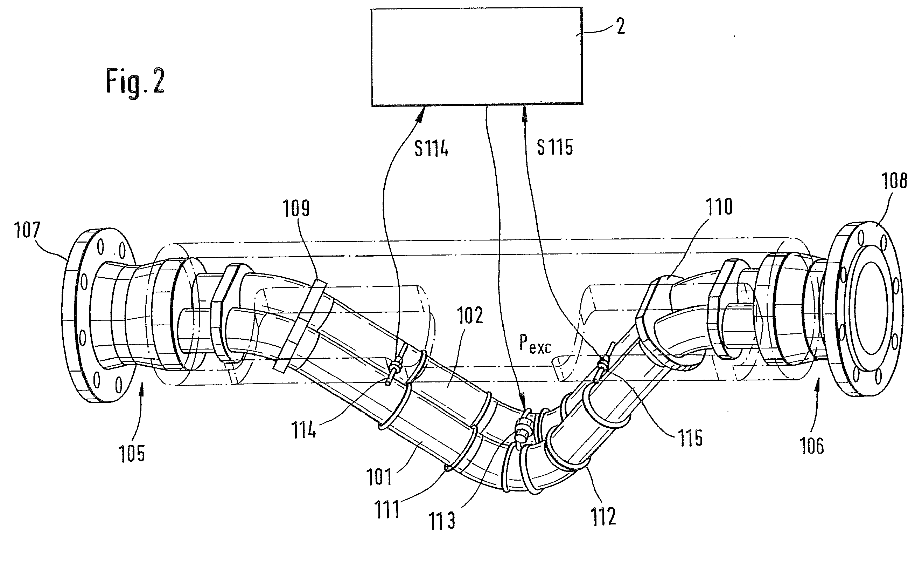

In den Fig. 1, 2 sind Ausführungsbeispiele für einen, insb. auf einen Massedurchfluß m eines in einer nicht dargestellten Rohrleitung strömenden Fluids reagierenden, Meßaufnehmers 1 vom Vibrationstyp gezeigt. Der Meßaufnehmer kann z.B. als Meßaufnehmer in einem Coriolis-Massedurchflußmesser verwendet, dazu dienen, im hindurchströmenden Fluid Corioliskräfte zu erzeugen sowie diese sensorisch zu erfassen und in elektronisch auswertbare Meßsignale umzuwandeln.

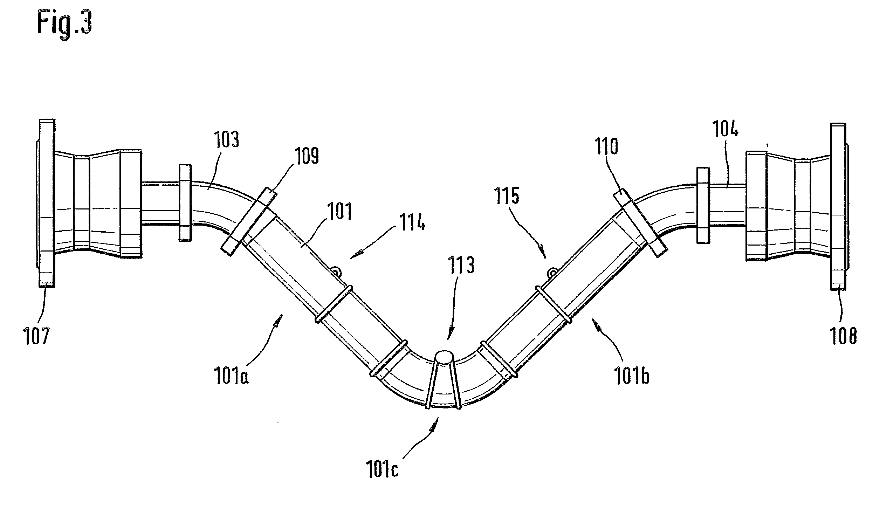

Zum Führen des zu messenden Fluids umfaßt der Meßaufnehmer 1 ein gekrümmtes erstes Meßrohr 101 von vorgebbarem Meßrohrlumen. Das Meßrohr 101 ist, wie aus den Fig. 1 bis 3 ohne weiteres ersichtlich, so geformt, daß es einlaßseitig ein erstes gerades Rohrsegment 101 a und auslaßseitig ein zweites gerades Rohrsegment 101 b aufweist. Die beiden geraden Rohrsegment stehen über ein bogenförmiges, z.B. kreisbogenförmiges, Rohrsegment 101c von vorgebbarer Raumform miteinander in Verbindung, und zwar bevorzugt so zueinander ausgerichtet, daß das Meßrohr 101 praktisch eine ebenen Fläche aufspannt. Als Material für das Meßrohr 101 kommen praktisch alle herkömmlicherweise bei solchen Meßrohren verwendeten Werkstoffe in Frage, wie z.B. Edelstahl-, Titan-, Tantal- oder Zirkonium-Legierungen etc.

Das Meßrohr 101 ist bevorzugt U-förmg oder, wie in Fig. 1 gezeigt, V-förmig gebogen, wie es z.B. auch in der EP-A 1 154 243 beschrieben ist. Weitere geeignete Raumformen für das Meßrohr 101 können ferner z.B. den eingangs referierten US-A 57 31 527, US-A 53 01 557, US-A 48 95 030, WO-A 01/ 33 174 oder WO-A 00/ 57 141 entnommen werden.

Wie in den Fig. 1 bis 3 dargestellt, mündet das Meßrohr 101 mit einem Einlaßende in ein Einlaßrohrstück 103 und mit einem Auslaßende in ein Auslaßrohrstück 104. Einlaßrohrstück 103 und Auslaßrohrstück 104 stehen bei eingebautem Meßgerät jeweils mit einem einlaßseitigen bzw. auslaßseitigen Abschnitt der Fluid führenden und üblicherweise geraden Rohrleitung in Verbindung. Die beiden Rohrstücke 103, 104 sind daher bevorzugt zueinander und zu einer die beiden imaginär verbindenden Längsachse A₁ des Meßaufnehmers fluchtend ausgerichtet.

Bevorzugt sind das Meßrohr 101 sowie das Einlaß- und das Auslaßrohrstück 103, 104 aus einem einzigen rohrförmigen Halbzeug von entsprechender Länge gefertigt. Dabei kann das Halbzeug in der dem Fachmann bekannten Weise z.B. mittels Dorn-Biegen oder mittels Press-Biegen etc. in die gewünschte Form gebracht und anschließend auf die erforderliche Länge zugeschnitten werden.

Für den Fall, daß der Meßaufnehmer lösbar in die Rohrleitung zu montieren ist, ist bevorzugt dem Einlaßrohrstück 103 ein erster Flansch 107 und dem Auslaßrohrstück 104 ein zweiter Flansch 108 angeformt; falls erforderlich können Einlaßrohrstück 103 und Auslaßrohrstück 104 aber auch direkt mit der Rohrleitung z.B. mittels Schweißung oder Hartlötung, verbunden werden.

Neben dem ersten Meßrohr 101 umfaßt der Meßaufnehmer 1 im hier gezeigten Ausführungsbeispiel ferner ein, insb. zum Meßrohr 101 identisches, zweites Meßrohr 102; letzteres ist jedoch nicht zwingend erforderlich, d.h. der Meßaufnehmer kann z.B., wie auch in der US-A 55 49 009 sowie in der nicht vorveröffentlichten europäischen Anmeldung 01 112546.5 beschrieben, nur ein einziges gekrümmtes Meßrohr umfassen.

Wie bei derartigen Meßaufnehmern mit Doppelrohranordnung üblich, münden beim Meßaufnehmer des Ausführungsbeispiels das Einlaßrohrstück 103 in ein Einlaßverteilerstück 105 und das Auslaßrohrstück 104 in ein entsprechendes Auslaßverteilerstück 106, so daß daß Meßrohr 101 im Betrieb praktisch via Einlaß- und Auslaßrohrstück 103, 104 sowie Einlaß- und Auslaßverteilerstück 105, 106 mit der angeschlossenen Rohrleitung kommuniziert. Analog dazu steht auch das Meßrohr 102 über das Einlaß- und das Auslaßverteilerstück 105, 106 mit der Rohrleitung in Verbindung.

Bevorzugt weist der Meßaufnehmer 1 ferner wenigstens ein Tragrahmen 116 zum Haltern des Meßrohrs 101 bzw. der Meßrohre 101, 102 mit einer, hier nicht gezeigten, Abdeckung für aus dem Tragrahmen herausragende Meßrohrsegmente auf.

Im Betrieb des Meßaufnehmers 1 werden die hier zwei Meßrohre 101, 102 in einem Nutzmode zu Biegeschwingungen um eine zur Längsachse A₁ des Meßaufnehmers im wesentlichen paralelle Schwingungsachse, insb. auf einer natürlichen Resonanzfrequenz eines Eigenmodes, angeregt, und zwar so, daß, wie bei derartigen Meßaufnehmern üblich, das Meßrohr 101, jedenfalls im Bereich der Rohrsegmente 101 a, 101b, 101c, überwiegend gegenphasig zum Meßrohr 102 oszilliert.

Die dadurch im hindurchströmenden Fluid induzierten Corioliskräfte bewirken bekanntlich eine auch vom zu messenden Massedurchfluß m abhängige, zusätzliche elastische Verformung der Meßrohre 101, 102, die jenen durch die Biegeschwingungen des Nutzmodes hervorgerufenen Verformungen des Meßrohrs 101 bzw. 102 jeweils überlagert ist. Es sei an dieser Stelle nochmals betont, daß bei den Schwingungen des Meßrohrs 101, insb. auch bei den Biegeschwingungen im Nutzmode, jedes der Rohrsegmente 101 a, 101b, 101c zumindest abschnittsweise lateral ausgelenkt und dabei zumindest abschnittsweise elastisch verformt, z.B. leicht ausgebogen und/oder verdreht, wird.

Falls erforderlich, können allfällige, von den vibrierenden Meßrohren 101, 102 im Einlaßrohrstück 103 und Auslaßrohrstück 104 verursachte mechanische Spannungen z.B. dadurch minimiert werden, daß die Meßrohre 101, 102, wie bei derartigen Meßaufnehmern üblich, einlaßseitig mittels wenigstens einer ersten Knotenplatte 109 und auslaßseitig mittels wenigstens einer zweiten Knotenplatte 110 miteinander mechanisch verbunden sind.

Zum Antreiben der Meßrohre 101, 102 umfaßt der Meßaufnehmer 1 mindestens einen Schwingungserreger 113. Dieser dient dazu, eine, von einer entsprechenden Meß- und Betriebsschaltung 2 z.B. des oben genannten Coriolis-Massedurchflußmessers eingespeiste, elektrische Erregerleistung *P_{exc}* in solche, z.B. pulsierenden oder harmonischen, Erregerkräfte *F_{exc}* umzuwandeln, die symmetrisch, also gleichzeitig, gleichmäßig jedoch gegensinnig, auf Meßrohr 101 und 102 einwirken und somit die zueinander gegenphasigen Schwingungen der Meßrohre 101, 102 erzeugen. Die Erregerkräfte *F_{exc}* können in der dem Fachmann bekannten Weise z.B. mittels einer Strom- und/ oder Spannungs-Regelschaltung, hinsichtlich ihrer Amplitude und, z.B. mittels einer Phasen-Regelschleife, hinsichtlich ihrer Frequenz eingestellt werden, vgl. hierzu auch die US-A 48 01 897. Es sei noch erwähnt, daß die Meß- und Betriebsschaltung 2 in der dem Fachmann bekannten Weise in einem entsprechenden, hier jedoch nicht dargestellen, Elektronikgehäuse untergebracht ist, das z.B. direkt am Meßaufnehmer anmontiert oder von diesem entfernt angeordnet sein kann.

Zum Erfassen von Schwingungen der vibrierenden Meßrohre 101, 102 weist der Meßaufnehmer 1 ferner einen einlaßßseitigen ersten Schwingungssensor 114 und einen auslaßseitigen zweiten Schwingungssensor 115 auf, welche beiden Schwingungssensoren 114, 115 auf Bewegungen der Meßrohre 101, 102, insb. deren laterale Auslenkungen und/ oder Verformungen, reagierend, ein entsprechendes erstes bzw. zweites Schwingungssignal s₁₁₄, s₁₁₅ liefern. Die beiden Schwingungssensor 114, 115 sind bevorzugt baugleich; darüber hinaus können sie auch im wesentlichen baugleich zum Schwingungserreger 113 ausgebildet sein.

Wie bereits erwähnt, bewirken allein die Biegeschwingungen im Nutzmode bereits eine zumindest abschnittsweise elastische Verformung des Meßrohrs 101. Diese Verformung wirkt sich insb. auch auf die Raumform des bogenförmigen Meßrohrsegments 101c und somit auf die Form des Meßrohrlumens in diesem Bereich, insb. auch im Querschnitt, aus.

In Abhängigkeit vom im Meßrohr 101 jeweils herrschenden statischen Innendruck bzw. in Abhängigkeit von einer entsprechenden Druckverteilung kann die Verformung des Meßrohrs 101, insb. aber die Verformung des bogenförmigen Rohrsegments 101c, im Betrieb des Meßaufnehmers 1 unterschiedlich ausgebildet sein. Dies wiederum kann bei solchen Meßaufnehmern z.B. bei schwankendem Innendruck bzw. schwankender Druckverteilung dazu führen, daß die durch den Nutzmode erzeugten Corioliskräfte trotz eines gleichbleibenden Massedurchflusses unterschiedlich hoch ausfallen, d.h. herkömmliche Meßaufnehmer der beschriebenen Art können auch eine nicht vernachlässigbar hohe Querempfindlichkeit gegenüber Druck, insb. gegenüber statischem Druck, aufweisen.

Es hat sich hierbei überraschenderweise gezeigt, daß diese Querempfindlichkeit in einem erheblichen Maße auf die druckabhängige Änderung der Raumform des Meßrohrs im relative kleinen Bereich bogenförmiger Rohrsegmente, insb. auch auf Änderungen im Querschnitt, zurückzuführen ist.

Zur Unterdrückung oder zumindest zur Verringerung dieser Querempfindlichkeit des Meßaufnehmers 1 und damit auch zur Reduzierung eines allfälligen Übersprechens vom Druck auf die mit dem Massendurchfluß korrespondierenden Corioliskräfte ist erfindungsgemäß daher wenigstens ein erstes Versteifungselement 111 für das Meßrohr 101 vorgesehen, das wie in den Fig. 1 oder 2 gezeigt, im Bereich des bogenförmigen Rohrsegments 101 c auf dem Meßrohr 101 fixiert ist. Das Versteifungselement 111 dient hier dazu, die Raumform, insb. auch eine Querschnittsform, des in der oben beschriebenen Weise oszillierenden Rohrsegments 101c so zu stabilisieren, daß letzteres trotz veränderlichem statischen Druck im Meßrohrlumen auf einen praktisch konstant gehaltenen Massedurchfluß in nahezu gleicher Weise mit einer Änderung seiner Raumform reagiert. Dafür ist das Versteifungselement 111 so am Meßrohr 101 fixiert, daß dessen laterale Schwingbewegungen im Vergleich zu gleichgeformten herkömmlichen Meßrohren ohne ein solches Versteifungselement im wesentlichen unbeeinflußt bleiben.

Das Versteifungselement 111 ist dementsprechend lediglich am Meßrohr 101 fixiert, so daß es, im Gegensatz z.B. zu den Knotenplatten 109, 110, den Schwingungen des Meßrohrs 101, abgesehen von einer möglichst gering gehaltenen Massenträgheit, praktisch durch nichts entgegenwirkt. Anders gesagt, das Versteifungselement 111 soll zum Zwecke der Stabilisierung der Raumform des Rohrsegments 101 c weder mit einem allfälligen zweiten Meßrohr 102 noch mit dem Tragrahmen 116 z.B. über feder-elastische und/oder dämpfende Elemente in Verbindung stehen, so daß das Meßrohr 101, insb. aber dessen Rohrsegmente 101 b, 101 b, 101 c, nach wie vor im wesentlichen frei schwingen können. Falls erforderlich, kann das Versteifungselement 111 dabei jedoch auch, wie in den Fig. 1 bzw. 2 angedeutet, z.B. als Halterung für den Schwingungserreger 113 dienen.

Als Materialien für das Versteifungselement 111 können beispielsweise dieselben verwendet werden wie für das Meßrohr 101. Da das Versteifungselement 111 betriebsgemäß nicht mit dem Fluid in Berührung kommt, wäre z.B. auch Metalle bzw. Metallegierungen von geringerer Güte als beim Meßrohr 101 ausreichend, selbstverständlich unter Berücksichtigung von dessen Verträglichkeit, z.B. hinsichtlich des Temperaturverhaltens, mit dem für das Meßrohr 101 gewählten Material.

Nach einer bevorzugten Ausgestaltung der Erfindung ist das Versteifungselement 111 ringförmig ausgebildet und so am Meßrohr 101 fixiert, daß dieses, wie auch in den Fig. 1, 2 angedeutet, vom Versteifungselement 111 umgriffen, insb. umspannt, ist, und zwar bevorzugt im wesentlichen koaxial.

Insbesondere für den Fall, daß das Versteifungselement 111 ringförmig ausgebildet ist, kann dieses z.B. auf das Meßrohr 101 thermisch aufgeschrumpft sein. Es kann aber z.B. auch geschlitzt auf das Meßrohr 101 aufgeschoben und durch Schweißen oder Löten, insb. Hartlöten, mit dem Meßrohr 101 verbunden oder z.B. auch bereits bei der Herstellung des oben erwähnten rohrförmigen Halbzeuges an dieses angeformt bzw. aus diesem ausgearbeitet werden. Anders gesagt, das wenigstens eine Versteifungselement 111 ist bevorzugt so am Meßrohr 101 fixiert, daß das Versteifungselement 111 auch solchen, insb. druckschwankungs- oder unterdruck-bedingten, Kräften oder Spannungen im Meßrohr 101 entgegenwirken kann, die sonst zu unererwünschten Deformationen oder, insb. radialen, Verzerrungen des Querschnitts führen würden, einhergehend mit partiellen Verringerungen des Durchmessers des Rohrsegment 101 c.

Nach einer bevorzugten ersten Variante der Erfindung ist das wenigstens eine Versteifungselement 111 direkt auf dem bogenförmigen Rohrsegment 101 c des Meßrohrs 101 angebracht, vgl. hierzu Fig. 1.

Nach einer bevorzugten zweiten Variante der Erfindung ist das Versteifungselement 111 in der Nähe des bogenförmigen Rohrsegments 101 c auf dem einlaßseitigen geraden Rohrsegment 101 a angebracht, vgl. hierzu Fig. 2. Zumindest bei dieser Variante der Erfindung umfaßt der Meßwandler ferner wenigstens ein im wesentlichen zum Versteifungselement 111 identisches zweites Versteifungselement 112 für das Meßrohr 101. Das Versteifungselement ist bei dieser Variante, wie in Fig. 2 dargestellt, bevorzugt auf dem geraden Rohrsegment 101 b fixiert, und zwar ebenfalls in der Nähe des bogenförmigen Rohrsegments 101c, insb. in gleichem Abstand zur Meßrohrmitte wie beim Versteifungselement 111. Wie aus der Fig. 1 ohne weiteres ersichtlich, können aber auch bei der oben erwähnte erste Variante zwei Versteifungselemente 111, 112 für das bogenförmige Rohrsegment 101c vorgesehen sein.

Untersuchungen haben ferner ergeben, daß eine Verwendung des Versteifungselements 111 sich vor allem auch dann vorteilhaft auf die Querempfindlichkeit des Meßaufnehmers auswirkt, wenn das Meßrohr 101 einen Innen-Durchmesser von weit mehr als 40 mm, insb. aber von mehr als 50 mm aufweist.

Ein Vorteil der Erfindung ist zudem auch darin zu sehen, daß solche Versteifungselemente ohne weiteres auch bei bereits bestehenden Meßaufnehmer-Konzepten oder auch bei bereits in Fertigung befindlichen Meßaufnehmer-Typen ohne großen technischen Mehraufwand nachgerüstet werden können, wodurch die Meßgenauigkeit auch bei herkömmlichen Coriolis-Massedurchflußmesser-Typen in einfacher Weise erheblich verbessert werden kann.

## Patentansprüche

1. Meßaufnehmer (1) vom Vibrationstyp, insb. zum Erzeugen von massedurchflußabhängigen Corioliskräften in strömenden Fluiden, mit wenigstens einem ein Einlaßende und ein Auslaßende aufweisenden, zumindest zeitweise vibrierenden Meßrohr (101) von vorgebbarem Meßrohrlumen zum Führen eines Fluids, welches Meßrohr (101)
- zum Hindurchströmenlassen des Fluids über ein in das Einlaßende mündendes Einlaßrohrstück (103) und über ein in das Auslaßende mündendes Auslaßrohrstück (104) mit einer angeschlossenen Rohrleitung kommuniziert und
- zum Verformen des Meßrohrlumens im Betrieb Biegeschwingungen um eine das Einlaß- und das Auslaßende imgaginär verbindende Schwingungsachse ausführt,
- wobei das Meßrohr (101) wenigstens ein bogenförmiges Rohrsegment (101c) von vorgebbarer Raumform aufweist, das sich einlaßseitig an ein erstes gerades Rohrsegment (101a) und auslaßseitg an ein zweites gerades Rohrsegment (101b) anschließt,
- wobei auf dem bogenförmigen Rohrsegment (101c) wenigstens ein der Stabilisierung der Raumform dienendes erstes Versteifungselement (111) fixiert ist, um eine Querempfindlichkeit *des Messaufnehmers auf einen im Messrohr herrschenden statischen Innendruck zu unterdrücken oder zumindest zu verringern,*
- wobei das wenigstens erste Versteifungselement (111) ringförmig ausgebildet und *lediglich am Meßrohr (101) fixiert* ist,
- und wobei das wenigstens erste Versteifungselement (111) so am Meßrohr (101) fixiert ist, daß dieses vom Versteifungselement (111) umgriffen ist.

2. Meßaufnehmer (1) vom Vibrationstyp, insb. zum Erzeugen von massedurchflußabhängigen Corioliskräften in strömenden Fluiden, mit wenigstens einem ein Einlaßende und ein Auslaßende aufweisenden, zumindest zeitweise vibrierenden Meßrohr (101) von vorgebbarem Meßrohrlumen zum Führen eines Fluids, welches Meßrohr (101)
- zum Hindurchströmenlassen des Fluids über ein in das Einlaßende mündendes Einlaßrohrstück (103) und über ein in das Auslaßende mündendes Auslaßrohrstück (104) mit einer angeschlossenen Rohrleitung kommuniziert und
- zum Verformen des Meßrohrlumens im Betrieb Biegeschwingungen um eine das Einlaß- und das Auslaßende imgaginär verbindende Schwingungsachse ausführt,
- wobei das Meßrohr (101) wenigstens ein bogenförmiges Rohrsegment (101c) von vorgebbarer Raumform aufweist, das sich einlaßseitig an ein erstes gerades Rohrsegment (101a) und auslaßseitg an ein zweites gerades Rohrsegment (101b) anschließt,
- wobei auf dem ersten geraden Rohrsegment (101a) *in der Nähe des bogenförmigen Rohrsegments (101c)* wenigstens ein der Stabilisierung der Raumform dienendes erstes Versteifungselement (111) und auf dem zweiten geraden Rohrsegment (101b) *in derNähe des bogenförmigen Rohrsegments (101c)* wenigstens ein Stabilisierung der Raumform dienendes zweites Versteifungselement (112) fixiert sind, um *eine* Querempfindlichkeit des *Messaufnehmers auf einen* im *Messrohr herrschenden statischen Innendruck zu unterdrücken* oder zumindest zu *verringern,*
- wobei das wenigstens erste Versteifungselement (111) *und das* zweite *Versteifungselement (112) ringförmig ausgebildet und lediglich am Meßrohr (101) fixiert sind,*
- und wobei das wenigstens erste Versteifungselement (111) und das *zweite Versteifungselement (112)* so am Meßrohr (101) fixiert sind, daß dieses *vom ersten Versteifungselement (111)* und vom *zweiten Versteifungselement (112)* umgriffen ist.

3. Meßaufnehmer (1) nach Anspruch 1, wobei das wenigstens erste Versteifungselement (111) das Meßrohr (101) im wesentlichen koaxial umgreift.

4. Meßaufnehmer (1) nach einem der vorherigen Ansprüche, wobei das Meßrohr (101) V-förmig ist.

5. Meßaufnehmer (1) nach einem der vorherigen Ansprüche, wobei das Meßrohr (101) einen Innen-Durchmesser von mehr als 40 mm, insb. mehr als 50 mm, aufweist.

6. Meßaufnehmer (1) nach einem der vorherigen Ansprüche, wobei das wenigstens erste Versteifungselement (111) aus demselben Material besteht, wie das Meßrohr (101).

7. Meßaufnehmer (1) nach einem der vorherigen Ansprüche, wobei das wenigstens erste Versteifungselement (111) durch Schweißen oder Löten, insb. Hartlöten, mit dem Meßrohr (101) verbunden ist.

8. Meßaufnehmer (1) nach einem der Ansprüche 1 bis 6, wobei das wenigstens erste Versteifungselement (111) auf das Meßrohr (101) thermisch aufgeschrumpft ist.

9. Meßaufnehmer (1) nach einem der vorherigen Ansprüche, weiters umfassend ein weiteres Meßrohr (102).

10. Meßaufnehmer (1) nach dem vorherigen Anspruch, weiters umfassend ein Einlaßverteilerstück (105), in das das Einlaßrohrstück (103) mündet, und ein Auslaßverteilerstück (106), in das das Auslaßrohrstück (104) mündet, wobei auch das weitere Meßrohr (102) über das Einlaßverteilerstück (105) und über das Auslaßverteilerstück (106) mit der Rohrleitung in Verbindung steht.

## Claims

1. Vibronic-type sensor (1), particularly designed to generate Coriolis forces, which depend on the mass flow, in flowing fluids, with at least one measuring tube (101) of a predefinable measuring tube cavity designed to conduct a fluid, said measuring tube (101) vibrating at least temporarily and having at least one inlet end and one outlet end, wherein said measuring tube
- communicates with a connected pipe via an inlet pipe element (103) that enters into the inlet end and via an outlet pipe element (104) that enters into the outlet end so that fluid can flow through, and
- during operation executes flexural vibrations around an axis of vibration that connects, in an imaginary manner, the inlet and outlet end, said vibrations designed to deform the measuring tube cavity,
- wherein the measuring tube (101) has at least one crescent-shaped pipe segment (101 c) of a predefinable spatial shape which is connected to a first straight pipe segment (101 a) on the inlet side and to a second straight pipe segment (101 b) on the outlet side,
- wherein at least a first stiffener element (111), which is designed to stabilize the spatial shape, is fixed on the crescent-shaped pipe segment (101 c) in order to suppress, or at least reduce, a cross-sensitivity of the sensor to a static inner pressure in the measuring tube,
- wherein the at least first stiffener element (111) has an annular shape and is only fixed on the measuring tube (101),
- and wherein the at least first stiffener element (111) is fixed on the measuring tube (101) in such a way that the measuring tube is encompassed by the stiffener element (111).

2. Vibronic-type sensor (1), particularly designed to generate Coriolis forces, which depend on the mass flow, in flowing fluids, with at least one measuring tube (101) of a predefinable measuring tube cavity designed to conduct a fluid, said measuring tube (101) vibrating at least temporarily and having at least one inlet end and one outlet end, wherein said measuring tube
- communicates with a connected pipe via an inlet pipe element (103) that enters into the inlet end and via an outlet pipe element (104) that enters into the outlet end so that fluid can flow through, and
- during operation executes flexural vibrations around an axis of vibration that connects, in an imaginary manner, the inlet and outlet end, said vibrations designed to deform the measuring tube cavity,
- wherein the measuring tube (101) has at least one crescent-shaped pipe segment (101 c) of a predefinable spatial shape which is connected to a first straight pipe segment (101 a) on the inlet side and to a second straight pipe segment (101 b) on the outlet side,
- wherein at least a first stiffener element (111), which is designed to stabilize the spatial shape, is fixed on the first straight pipe segment (101 a) near the crescent-shaped pipe segment (101c) and at least a second stiffener element (112) is fixed on the second straight pipe segment (101 b) near the crescent-shaped pipe segment (101 c) in order to suppress, or at least reduce, a cross-sensitivity of the sensor to a static inner pressure in the measuring tube,
- wherein the at least first stiffener element (111) and the second stiffener element (112) have an annular shape and are only fixed on the measuring tube (101),
- and wherein the at least first stiffener element (111) and the second stiffener element (112) are fixed on the measuring tube (101) in such a way that the measuring tube is encompassed by the first stiffener element (111) and the second stiffener element (112).

3. Sensor (1) as claimed in Claim 1, wherein the at least first stiffener element (111) encompasses the measuring tube (101) in an essentially coaxial manner.

4. Sensor (1) as claimed in one of the previous claims, wherein the measuring tube (101) is V-shaped.

5. Sensor (1) as claimed in one of the previous claims, wherein the measuring tube (101) has an internal diameter of more than 40 mm, particularly of more than 50 mm.

6. Sensor (1) as claimed in one of the previous claims, wherein the at least first stiffener element (111) is made from the same material as the measuring tube (101).

7. Sensor (1) as claimed in one of the previous claims, wherein the at least first stiffener element (111) is connected to the measuring tube (101) via welding or soldering, particularly hard soldering.

8. Sensor (1) as claimed in one of the Claims 1-6, wherein the at least first stiffener element (111) is heat-shrunk onto the measuring tube (101).

9. Sensor (1) as claimed in one of the previous claims, further comprising an additional measuring tube (102).

10. Sensor (1) as claimed in the previous claim, further comprising an inlet manifold (105) into which the inlet pipe element (103) enters and an outlet manifold (106) into which the outlet pipe element (104) enters, wherein the additional measuring tube (102) is also connected to the pipe via the inlet manifold (105) and the outlet manifold (106).

## Revendications

1. Capteur (1) du type à vibrations, notamment destiné à la génération de forces de Coriolis fonction du débit massique dans des fluides en circulation, avec au moins un tube de mesure (101) vibrant au moins temporairement, présentant au moins une extrémité d'entrée et une extrémité de sortie, d'un canal intérieur de tube de mesure prédéfinissable destiné à l'acheminement d'un fluide, lequel tube de mesure (101)
- communique avec une conduite raccordée pour l'écoulement du fluide à travers un élément de tube d'entrée (103) débouchant dans l'extrémité d'entrée et à travers un élément de tube de sortie (104) débouchant dans l'extrémité de sortie, et
- exécute en fonctionnement des vibrations de flexion autour d'un axe de vibration reliant de façon imaginaire l'extrémité d'entrée et l'extrémité de sortie, lesquelles vibrations sont destinées à déformer le canal intérieur de tube de mesure,
- le tube de mesure (101) comportant au moins un segment de tube en forme d'arc (101c) d'une forme spatiale prédéfinissable, lequel segment se connecte côté entrée à un premier segment de tube droit (101 a) et côté sortie à un deuxième segment de tube droit (101 b),
- au moins un premier élément raidisseur (111) étant fixé sur le segment de tube en forme d'arc (101 c), lequel élément est destiné à la stabilisation de la forme spatiale, afin de supprimer ou au moins de réduire une sensibilité transversale du capteur à une pression interne statique régnant dans le tube de mesure,
- l'au moins premier élément raidisseur (111) étant conçu en forme d'anneau et fixé uniquement sur le tube de mesure (101),
- et l'au moins premier élément raidisseur (111) étant fixé sur le tube de mesure (101) de telle sorte que ce dernier est entouré par l'élément raidisseur (111).

2. Capteur (1) du type à vibrations, notamment destiné à la génération de forces de Coriolis fonction du débit massique dans des fluides en circulation, avec au moins un tube de mesure (101) vibrant au moins temporairement, présentant au moins une extrémité d'entrée et une extrémité de sortie, d'un canal intérieur de tube de mesure prédéfinissable destiné à l'acheminement d'un fluide, lequel tube de mesure (101)
- communique avec une conduite raccordée pour l'écoulement du fluide à travers un élément de tube d'entrée (103) débouchant dans l'extrémité d'entrée et à travers un élément de tube de sortie (104) débouchant dans l'extrémité de sortie, et
- exécute en fonctionnement des vibrations de flexion autour d'un axe de vibration reliant de façon imaginaire l'extrémité d'entrée et l'extrémité de sortie, lesquelles vibrations sont destinées à déformer le canal intérieur de tube de mesure,
- le tube de mesure (101) comportant au moins un segment de tube en forme d'arc (101c) d'une forme spatiale prédéfinissable, lequel segment se connecte côté entrée à un premier segment de tube droit (101 a) et côté sortie à un deuxième segment de tube droit (101 b),
- au moins un premier élément raidisseur (111) étant fixé sur le premier segment de tube droit (101 a), à proximité du segment de tube en forme d'arc (101 c), lequel élément est destiné à la stabilisation de la forme spatiale, et au moins un deuxième élément raidisseur (112) étant fixé sur le deuxième segment de tube droit (101 b), à proximité du segment de tube en forme d'arc (101 c), lequel élément est destiné à la stabilisation de la forme spatiale, afin de supprimer ou au moins de réduire une sensibilité transversale du capteur à une pression interne statique régnant dans le tube de mesure,
- l'au moins premier élément raidisseur (111) et le deuxième élément raidisseur (112) étant conçus en forme d'anneau et fixés uniquement sur le tube de mesure (101),
- et l'au moins premier élément raidisseur (111) et le deuxième élément raidisseur (112) étant fixés sur le tube de mesure (101) de telle sorte que ce dernier est entouré par le premier élément raidisseur (111) et par le deuxième élément raidisseur (112).

3. Capteur (1) selon la revendication 1, pour lequel l'au moins un élément raidisseur (111) entoure le tube de mesure (101) pour l'essentiel de façon coaxiale.

4. Capteur (1) selon l'une des revendications précédentes, pour lequel le tube de mesure (101) est en forme de V.

5. Capteur (1) selon l'une des revendications précédentes, pour lequel le tube de mesure (101) présente un diamètre intérieur supérieur à 40 mm, notamment supérieur à 50 mm.

6. Capteur (1) selon l'une des revendications précédentes, pour lequel l'au moins premier élément raidisseur (111) est constitué du même matériau que le tube de mesure (101).

7. Capteur (1) selon l'une des revendications précédentes, pour lequel l'au moins premier élément raidisseur (111) est relié avec le tube de mesure (101) par soudage ou brasage, notamment par brasage fort.

8. Capteur (1) selon l'une des revendications 1 à 6, pour lequel l'au moins premier élément raidisseur (111) est emmanché thermiquement sur le tube de mesure (101).

9. Capteur (1) selon l'une des revendications précédentes, comprenant en outre un tube de mesure supplémentaire (102).

10. Capteur (1) selon la revendication précédente, comprenant en outre un collecteur d'entrée (105), dans lequel débouche l'élément de tube d'entrée (103), et un collecteur de sortie (106), dans lequel débouche l'élément de tube de sortie (104), le tube de mesure supplémentaire (102) étant relié avec la conduite à travers le collecteur d'entrée (105) et à travers le collecteur de sortie (106).
